# EUROPEAN PATENT SPECIFICATION

(11) **EP 2 520 524 B1**
(45) Date of publication and mention of the grant of the patent: **01.04.2015**
(21) Application number: 12167028.5
(22) Date of filing: 07.05.2012
(51) Int. Cl.: B65G 61/00, B65B 5/10, B65G 47/51

(54) **Transfer system for transferring products between two parallel transport lines**
Transfersystem für den Transfer von Produkten zwischen zwei parallelen Förderstrecken
Système de transfer pour le transfer de produits entre deux lignes de convoyage parallèles

(30) Priority: 06.05.2011 IT TO20110405
(43) Date of publication of application: 07.11.2012
(73) Proprietor: CARLE & MONTANARI - OPM S.p.A., Rozzano (MI) (IT)
(72) Inventor: Abluton, Aldo, 14100 ASTI (IT)
(74) Representative: Bergadano, Mirko

(56) References cited:
- WO-A1-95/35238
- WO-A1-2006/061024
- WO-A1-2010/022832
- US-A- 6 011 998

## Description

The present invention relates to a transfer system for transferring products between two parallel transport lines by means of a series of robots.

Packaging systems are known, in which a belt transports randomly arranged products parallel to a conveyor, which transports a series of spaced compartments at a constant pace.

The products are picked up and then deposited in the compartments by means of at least two robots, arranged in a row one after the other along the feeding direction of the belt and above the belt itself. The packaging system is provided with a vision system which is arranged upstream of the row of robots, determines the positions of the incoming products and communicates information relative to said positions to one or more control units associated with the robots.

In general, the speed of the compartments is set according to the rate of incoming products, but effectively the number of products oscillates greatly over time and depends on the method with which the products are unloaded onto the belt upstream of the robots.

Normally, the last robot in the row is configured so as to attempt to fill any compartments which were not filled by the preceding robots. If the compartments and the products travel in the same direction, the last robot sometimes does not have available products on the belt, as they have already been picked up by the preceding robots. To avoid the exit of empty compartments, usually the speed of the conveyor transporting the compartments is temporarily reduced. By doing so, however, the robots at the beginning of the row tend to fill the compartments more than necessary: in other words, an opposite situation tends to develop, in which the last robot does not find empty compartments in which to put the products arriving at the end of the belt. In this situation, in order to avoid these excess products to exit and be discarded, there is the tendency to speed up again the conveyor transporting the compartments.

The repeated decelerations and accelerations do not always manage to compensate for the fluctuations in the quantity of incoming products and tend to cause the system to go into oscillation in a manner which is unstable and difficult to predict.

In order to limit these drawbacks, i.e. to keep the relative speed between compartments and products as constant as possible, various solutions have been adopted, including the one shown in EP 2233400 A1, according to the preamble of claim 1. This document teaches how to associate a dedicated magazine or buffer with at least one of the robots, which can be used by said robot to temporarily park products which are in excess on the incoming belt. This document also suggests the use of a single buffer, which is shared by all the robots.

WO 2006/061024 A1 discloses a transfer system, but not a buffer in the sense of the present application.

The need was felt to perfect this solution, so as to reduce the dimensions of the system as much as possible and optimize the algorithms of picking up and depositing the products.

The object of the present invention is to provide a transfer system for transferring products between two parallel transport lines by means of a series of robots, which allows the above-mentioned requirement to be fulfilled in a simple and cost-effective manner.

According to the present invention, a transfer system is provided for transferring products between two parallel transport lines by means of a series of robots, as defined in claim 1.

The invention will now be described with reference to the accompanying drawings, which illustrate an embodiment thereof by way of non-limiting example, and in which:
- figure 1 shows, partially and in perspective, a preferred embodiment of the transfer system for transferring products between two parallel transport lines by means of a series of robots, according to the present invention; and
- figure 2 is similar to figure 1 and shows a further preferred embodiment of the transfer system according to the present invention.

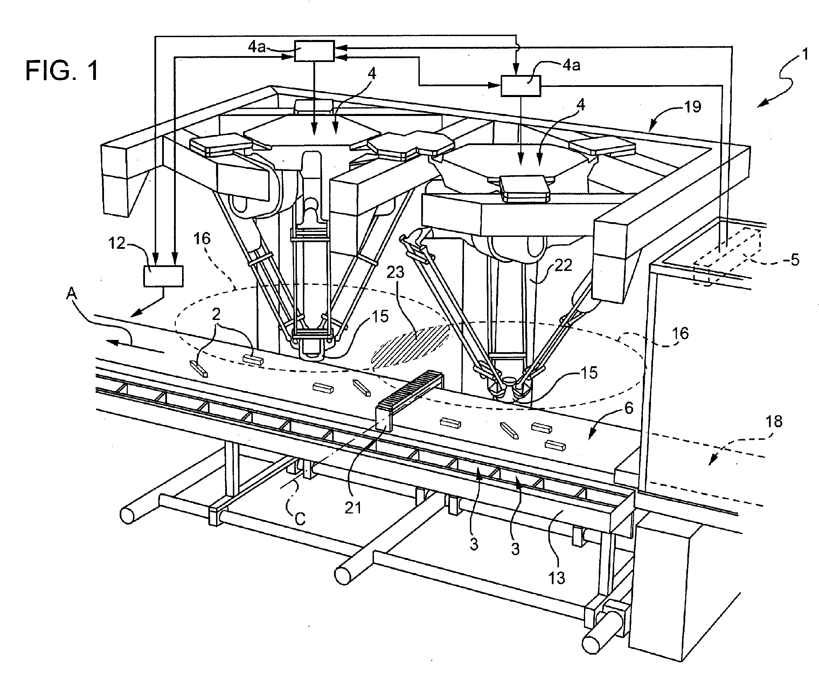

In figure 1, the numeral 1 indicates, as a whole, a transfer system (partially shown) for inserting products 2 into respective compartments 3 by means of a series of robots 4, which are controlled by respective processing and control units 4a on the basis of information provided by a vision system 5. In particular, figure 1 shows a cell with two robots 4, but there could be a greater number of robots and/or cells.

The products 2 are deposited or unloaded randomly, i.e. in random positions, on the upper surface of a conveyor belt 6 by means of a production, transport, sorting or unloading system (not shown), at the beginning of the path defined by said belt 6. The products 2 may be of the same type or different types: in the latter case, the compartments 3 may be filled with different types of products or with the same type of products.

Belt 6 is driven by an electric motor (not shown) in order to move the products 2 along a rectilinear direction A, preferably at a constant speed, under the control of a central processing and control unit 12, separated by the units 4a.

The compartments 3 are transported parallel to direction A and in fixed relative positions by a conveyor 13, for example a chain conveyor, which is arranged side by side with belt 6. In the example shown, the compartments 3 are arranged at a constant distance or pace, and conveyor 13 is motorized so as to move the row of compartments 3 in the same direction as the products 2, in particular towards a packaging machine (not shown).

According to alternative solutions (not shown), the compartments 3 may be moved in counter-flow with respect to the products 2; and/or two conveyors parallel to belt 6 may be provided , having the same speed or different speeds and/or different directions.

In particular, the compartments 3 are defined by boxes or trays carried by conveyor 13, or by housings provided directly on conveyor 13. Each compartment 3 may have dimensions such as to house a single product 2, or may have greater dimensions so as to house a plurality of products 2.

Preferably, the speed of conveyor 13 is set at a constant value which is a function of the rate of incoming products 2 and is such so as to avoid the discarding of products 2 at the end of belt 6. In general, the rate of incoming products has a substantially constant average component and an oscillating component, which depend on the system arranged upstream of belt 6.

The robots 4 are substantially arranged in a row along direction A, comprising respective gripping members 15, defined by suckers or pincers, and define respective working fields 16, in which the gripping members 15 can arrive and operate, i.e. go and pick up and go and deposit the products 2. The size of each working field 16 depends on the movement capacity of the robot 4, i.e. its the dimensional and constructional characteristics and its degrees of freedom. In particular, the robots 4 are of the type commonly known as delta-robots, whereby each one has a working field 16 which is substantially cylindrical with a vertical central axis. The robots 4 are arranged above belt 6 and conveyor 13 and are suspended from one or more support structures 19. In the particular example shown, as mentioned above, structure 19 (partially shown) is of the cell type and carries two robots 4.

Before arriving at the robots 4, the products 2 are transported from belt 6 through a detecting area 18, towards which vision system 5 is aimed. Vision system 5 comprises at least one video camera (or a camera) and a data processing unit, which processes the images from the video camera, determines the position, the orientation and the number of products 2 passing in area 18 and communicates the corresponding information at least to unit 4a of the first robot 4 (considering the feeding direction of the products 2 along direction A). Said first robot 4 distributes the data of the products 2 which it is not able to pick up to the subsequent robots 4. Each robot 4 will tend to pick up and deposit the maximum number of products 2.

System 1 further comprises a buffer, or magazine, or parking area, which is indicated by the reference number 21 and defines a horizontal supporting surface having one or more places available, in order to have the possibility to temporarily park respective products 2, before depositing them in the compartments 3.

According to the present invention, buffer 21 is arranged above belt 6 and/or conveyor 13, at a sufficient height to allow the products 2 to pass below, and in an intermediate or boundary area between two adjacent robots 4, which both have access to the same places on the buffer 21, both for picking up and depositing products 2.

Buffer 21 is therefore aligned with the robots 4 along direction A, but is preferably elongated in a horizontal direction C which is orthogonal to direction A, so as to define a plurality of available places which are side by side along direction C. In the example shown, buffer 21 is only arranged above belt 6 and is fixed to a structure which supports belt 6. According to a variation (not shown), buffer 21 preferably extends for the whole width of belt 6 and conveyor 13 and is supported, at the ends thereof, by two lateral uprights 22 of structure 19. Preferably, position sensors or additional vision systems (not shown) can be provided in order to determine the position and/or orientation of the products 2 on buffer 21 and therefore communicate the corresponding information to the units 4a, so as to increase the precision of the operations of picking up products 2 from buffer 21. Such sensors are not strictly necessary in all those cases in which the precision required is not critical.

In the embodiment in figure 1, buffer 21 is within both the working fields 16 and is preferably kept in a fixed position along direction A. In other words, the working fields 16 intersect at the boundary area between the two adjacent robots 4, whereby a space 23 exists which is shared by both working fields 16 and which houses the available places of buffer 21.

The robots 4 both have access to buffer 21, but unit 12 is configured so as to prevent the two robots 4 having contemporary access to space 23 and therefore colliding with each other. Unit 12 manages the authorizations for access to shared space 23 communicating with both the units 4a, and has a block indicator which is active or deactivated so as to indicate to the units 4a if space 23 is occupied or free, respectively. When one of the two robots 4 has to access space 23 in order to pick up or deposit a product 2 on the basis of the algorithm established in the corresponding unit 4a, the latter sends an access request to unit 12 in order to verify the state of the aforementioned lock indicator and therefore establish if space 23 is occupied. If space 23 is free, unit 12 sends an explicit consent response to unit 4a, and the latter sends a corresponding signal to unit 12 in order to activate the lock indicator. In this way, if the other unit 4a sends an access request to unit 12, it finds the lock indicator to be active and does not receive consent to enter space 23.

After the product 2 has been deposited/picked up, robot 4 exits from space 23 and the corresponding unit 4a sends a signal to unit 12 which indicates the conclusion of the operation and deactivates the aforementioned lock indicator, so that subsequent access requests can be satisfied.

According to a variation (not shown), a presence detection system and/or a position detection system, for example of the video camera type, is provided in order to determine if any of the two robots 4 approaches space 23 and/or engages space 23. Said system sends a relative lock signal to unit 12 and/or to unit 4a of the other robot 4, in order to prevent that the latter also accesses space 23.

In the event that unit 12 receives two simultaneous access requests, it is configured to give access priority to robot 4 which is upstream, considering the feeding direction of the products 2 on belt 6.

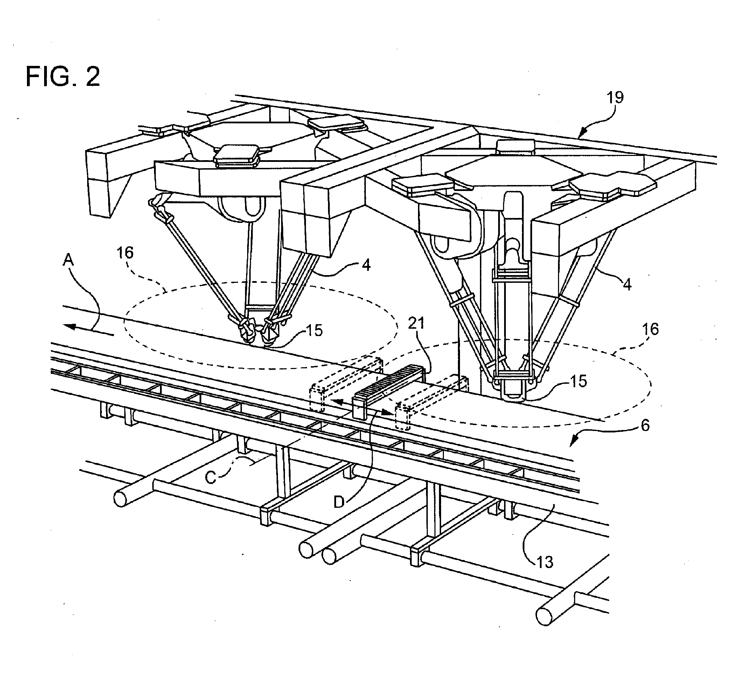

In the embodiment partially shown in figure 2, the working fields 16 are distinct, or space 23 is too small to house all the available places on buffer 21: in order to obviate this drawback and ensure that the places on buffer 21 can be reached by both robots 4, buffer 21 is movable along direction A of a relatively short travel D (for example of around 20 cm) under the action of an actuator assembly (not shown). Said actuator assembly is controlled by units 12 and/or 4a, so as to move buffer 21 between two operative positions, in which buffer 21 is selectively within one and the other of the working fields 16, respectively. Buffer 21 is synchronously actuated with the picking up and depositing movements carried out by the robots 4, so as to serve one or the other of the two robots 4 according to necessity. In other words, buffer 21 operates as a shuttle equipped with non-uniform alternating motion, to ensure that the robots 4 both have access to the available places on buffer 21.

In use, the units 4a communicate with each other in order to know which products 2 have remained on belt 6 and which free compartments 3 have remained after the cycles carried out by the other robots 4 ("cycle" means a picking up movement and a depositing movement together), while vision system 5 distributes the data relative to the various incoming products 2 to the various units 4a. The units 4a calculate the instantaneous positions of the products 2 using the relative positions of the products 2 provided by vision system 5 and using the speed of the products 2 along direction A (which is calculated, preferably, according to the rotation angle of the electric motor of belt 6, measured by a position transducer, encoder or resolver). They further calculate the instantaneous positions of the free compartments 3, according to the relative position of the compartments 3 and using the speed of conveyor 13 (which, in particular, is calculated according to the rotation angle of a motor of conveyor 13, measured by another encoder or resolver). Units 4a and/or 12 can also regulate the operating rhythm of each robot 4, i.e. the number of cycles in the unit of time, according to the average rate of incoming products.

On each cycle, the units 4a command the respective robots 4 to carry out one of the following alternatives: cycle n° 1: pick up at least one product 2 from belt 6 and deposit it in buffer 21; or cycle n° 2: pick up at least one product 2 from belt 6 and deposit it in a compartment 3; or cycle n° 3: pick up at least one product 2 from buffer 21 and deposit it in a free compartment 3.

The choice of which cycle to carry out is also made according to the level of filling of buffer 21, so as to keep said level of filling between a minimum percentage value and a maximum percentage value (with respect to the maximum number of available places). Such limit values are preferably set manually according to the type of product, the average rate of incoming products or other parameters.

For precautionary reasons, a safety check is provided, which stops conveyor 13 if there are any compartments 3 which are at least partially empty as they exit system 1, so as to give the last robot 4 time to terminate the filling. In this situation, the packaging machine arranged after conveyor 13 is also stopped. Said situation occurs occasionally, in the event of an error in depositing a product 2, or the damaging of a product 2, or variations in flow which are too high to be compensated by buffer 21.

On start-up of system 1, it may be necessary to at least partially load buffer 21 before beginning the transfer of the products 2 into the compartments 3; subsequently, the robots 4 will tend to maintain a number of products on buffer 21 which is sufficiently high to be used in an efficient manner in the event of necessity.

Thanks to the position of buffer 21 and the possible movement of buffer 21 along direction A, the available places of buffer 21 can be used for picking up and/or depositing by both the adjacent robots 4, whereby the operation of system 1 is extremely flexible. In particular, the products 2 can even be caused to go back, i.e. transferred in the opposite direction with respect to the exit of belt 6, e.g. in order to obviate a shortage of incoming products 2 on belt 6.

Moreover, the position of buffer 21 above belt 6 and/or conveyor 13 is extremely advantageous for reducing dimensions, considering that nothing is provided at the sides of the transport lines, which are defined by belt 6 and conveyor 13.

Furthermore, the embodiment in figure 1 is constructively very simple, due to the fact that it is not necessary to move buffer 21 along direction A, but only to programme the units 4a so as to prevent interference between the robots 4 in space 23.

Finally, from the above it is apparent that modifications and variations may be made to the described system 1, which do not lie outside the scope of protection of the present invention, as defined in the appended claims.

For example, instead of consisting of a single belt 6, the product transport line could be constituted by one or more belts arranged in succession along direction A and dragged independently of each other in order to eliminate possible empty spaces between groups of products if necessary.

Furthermore, vision system 5 could comprise one or more additional video cameras, arranged, for example, in the boundary areas between the working fields 16 of the robots 4.

The gripping members 15 could each have two or more suckers, so as to pick up several products, one after the other, before depositing them on buffer 21 or in the compartments 3.

Vision system 5 could be replaced by a system of sensors different from the video cameras for determining the position of the products on belt 6.

## Claims

1. A transfer system (1) for transferring products (2) between two parallel transport lines (6, 13) by means of a series of robots (4), the system comprising:
- a first transport line (6) for transporting randomly arranged products along a longitudinal direction (A);
- at least one second transport line (13) beside said first transport line (6) for transporting compartments (3) in a direction parallel to said longitudinal direction;
- sensor means (5) for determining the positions of the products (2) on said first transport line (6);
- at least two robots (4) arranged along a row parallel to said longitudinal direction (A), comprising respective gripping members (15), and defining respective working fields (16), in which said gripping members (15) can move;
- control means (12, 4a) for operating said robots (4) on the basis of the positions determined by said sensor means (5) and transferring the products (2) from said first transport line (6) into said compartments (3);
- a buffer (21) shared by said robots (4);
**characterized in that** said buffer (21) is arranged in an intermediate area between said robots (4), above at least one of said first and second transport lines (6, 13), at a height such as to let products (2) pass below, and has at least one place for a product (2) where both said robots (4) can access and deposit a product, and **in that** the control means (4a) are configured to enable both said robots (4) to access and pick up the deposited product on the buffer (21).

2. The transfer system according to claim 1, **characterised by** comprising position sensors or vision systems in order to determine the position and/or orientation of the products (2) on said buffer (21) and communicate the corresponding information to said control means (4a).

3. The transfer system according to claim 1 or 2, **characterised in that** said working fields (16) intersect so as to have a common space (23), which houses said place; said control means (12, 4a) being configured so as to avoid a simultaneous access of said robots (4) in said common space (23).

4. The transfer system according to claim 3, **characterised in that** said control means (12) are configured so as to give access priority in said common space (23) to the robot (4) which is upstream, considering the feeding direction of said first transport line (6).

5. The transfer system according to claim 3 or 4, **characterised in that** said buffer (21) is fixed along said longitudinal direction (A).

6. The system according to claim 1 or 2, **characterised in that** said buffer (21) is movable along said longitudinal direction (A) in a manner coordinated with the movements of said robots (5), under the action of actuator means, between two operative positions, in which said place is selectively inside one and, respectively, the other of said working fields (16).

7. The transfer system according to any of the preceding claims, **characterised in that** said buffer (21) is elongated along a horizontal axis (C) orthogonal to said longitudinal direction (A) so as to define a plurality of places which are set side by side along said axis (C).

8. The system according to claim 7, **characterised in that** said buffer (21) extends for the whole width of said first transport line (6).

9. The system according to claim 8, **characterised in that** said buffer (21) is supported at its side ends by two uprights (22) defining part of a cell structure (19) which also supports said robots (4).

10. The system according to any of the preceding claims, **characterised in that** said robots are delta-robots.

## Patentansprüche

1. Transfersystem (1) zum Übertragen von Produkten (2) zwischen zwei parallelen Transportlinien (6, 13) mittels einer Reihe von Robotern (4), wobei das System Folgendes aufweist:
- eine erste Transportlinie (6) zum Transportieren von zufällig angeordneten Produkten entlang einer Längsrichtung (A);
- zumindest eine zweite Transportlinie (13) neben der ersten Transportlinie (6) zum Transportieren von Abteilen (3) in einer Richtung parallel zu der Längsrichtung;
- Sensormittel (5) zum Bestimmen der Positionen der Produkte (2) auf der ersten Transportlinie (6),
- zumindest zwei Roboter (4), die entlang einer Reihe parallel zur Längsrichtung (A) angeordnet sind, welche jeweilige Greifglieder (15) aufweisen und jeweilige Arbeitsfelder (16) definieren, in denen sich die Greifglieder (15) bewegen können;
- Steuermittel (12, 4a) zum Betreiben der Roboter (4) auf der Grundlage der Positionen, die von den Sensormitteln (5) bestimmt wurden, und zum Übertragen der Produkte (2) von der ersten Transportlinie (6) in die Abteile (3);
- einen Puffer (21), der gemeinsam von den Robotern (4) verwendet wird;
**dadurch gekennzeichnet, dass** der Puffer (21) in einem Zwischenbereich zwischen den Robotern (4) über der ersten Transportlinie (6) und/oder der zweiten Transportlinie (13) in einer Höhe angebracht ist, dass Produkte (2) darunter hindurch gelassen werden können, und der mindestens einen Platz für ein Produkt (2) hat, wobei beide Roboter (4) auf ein Produkt zugreifen können und ein Produkt ablegen können, und dadurch, dass die Steuermittel (4a) konfiguriert sind, zu ermöglichen, dass die Roboter (4) auf das zuvor in dem Puffer (21) abgelegte Produkt zuzugreifen und dieses aufzunehmen.

2. Transfersystem nach Anspruch 1, **dadurch gekennzeichnet, dass** es Positionssensoren oder Videosysteme aufweist, um die Position und/oder Orientierung der Produkte (2) auf dem Puffer (21) zu bestimmen und die entsprechenden Informationen an die Steuermittel (4a) zu übermitteln.

3. Transfersystem nach Anspruch 1 oder 2, **dadurch gekennzeichnet, dass** die Arbeitsfelder (16) sich schneiden, so dass sich ein gemeinsamer Raum (23) ergibt, der den Platz beinhaltet; wobei die Steuermittel (12, 4a) so konfiguriert sind, dass sie einen gleichzeitigen Zugriff der Roboter (4) in den gemeinsamen Raum (23) vermeiden.

4. Transfersystem nach Anspruch 3, **dadurch gekennzeichnet, dass** die Steuermittel (12) so konfiguriert sind, dass sie dem Roboter (4), der bezüglich der Transportrichtung der ersten Transportlinie (6) stromaufwärts gelegen ist, Zugriffspriorität auf den gemeinsamen Raum (23) geben.

5. Transfersystem nach Anspruch 3 oder 4, **dadurch gekennzeichnet, dass** der Puffer (21) entlang der Längsrichtung (A) festgelegt ist.

6. Transfersystem nach Anspruch 1 oder 2, **dadurch gekennzeichnet, dass** der Puffer (21) entlang der Längsrichtung (A) in einer Weise, die mit den Bewegungen der Roboter (4) koordiniert ist, unter der Wirkung von Betätigungsmitteln zwischen zwei Positionen bewegbar ist, in denen der Platz selektiv in einem bzw. in dem anderen der Arbeitsfelder (16) ist.

7. Transfersystem nach einem der vorhergehenden Ansprüche, **dadurch gekennzeichnet, dass** der Puffer (21) entlang einer horizontalen Achse (C) senkrecht zur Längsrichtung (A) langgestreckt ist, um eine Vielzahl von Plätzen zu definieren, die Seite-an-Seite entlang der Achse (C) angeordnet sind.

8. System nach Anspruch 7, **dadurch gekennzeichnet, dass** der Puffer (21) sich über die gesamte Breite der ersten Transportlinie (6) erstreckt.

9. System nach Anspruch 8, **dadurch gekennzeichnet, dass** der Puffer (21) an seinen Seitenenden durch zwei aufrechte Elemente (22) getragen wird, die einen Teil einer Zellenstruktur (19) definieren, welche auch die Roboter (4) trägt.

10. System nach einem der vorhergehenden Ansprüche, **dadurch gekennzeichnet, dass** die Roboter Delta-Roboter sind.

## Revendications

1. Système de transfert (1) pour transférer des produits (2) entre deux lignes de transport parallèles (6, 13) au moyen d'une série de robots (4), le système comprenant :
une première ligne de transport (6) pour transporter des produits agencés de manière aléatoire le long d'une direction longitudinale (A) ;
au moins une seconde ligne de transport (13) à côté de ladite première ligne de transport (6) pour transporter des compartiments (3) dans une direction parallèle à ladite direction longitudinale ;
des moyens de capteur (5) pour déterminer les positions des produits (2) sur ladite première ligne de transport (6) ;
au moins deux robots (4) agencés le long d'une rangée parallèle à ladite direction longitudinale (A), comprenant des moyens de préhension (15) respectifs, et définissant des champs de travail (16) respectifs, dans lequel lesdits éléments de préhension (15) peuvent se déplacer ;
des moyens de commande (12, 4a) pour actionner lesdits robots (4) sur la base des positions déterminées par lesdits moyens de capteur (5) et transférer les produits (2) de ladite première ligne de transport (6) dans lesdits compartiments (3) ;
un tampon (21) partagé par lesdits robots (4);
**caractérisé en ce que** ledit tampon (21) est agencé dans une zone intermédiaire entre lesdits robots (4) au-dessus d'au moins l'une parmi lesdites première et seconde lignes de transport (6, 13) à une hauteur telle que l'on laisse les produits (2) passer au-dessous, et a au moins un emplacement pour un produit (2) auquel les deux desdits robots (4) peuvent avoir accès et déposer un produit, et ce que les moyens de commande (4a) sont configurés pour permettre aux deux desdits robots (4) d'avoir accès et de prélever le produit déposé sur le tampon (21).

2. Système de transfert selon la revendication 1, **caractérisé en ce qu'**il comprend des capteurs de position ou des systèmes de vision afin de déterminer la position et/ou l'orientation des produits (2) sur ledit tampon (21) et communiquer l'information correspondante auxdits moyens de commande (4a).

3. Système de transfert selon la revendication 1 ou 2, **caractérisé en ce que** lesdits champs de travail (16) se recoupent afin d'avoir un espace commun (23), qui loge ledit emplacement ; lesdits moyens de commande (12, 4a) étant configurés afin d'éviter un accès simultané desdits robots (4) dans ledit espace commun (23).

4. Système de transfert selon la revendication 3, **caractérisé en ce que** lesdits moyens de commande (12) sont configurés pour donner la priorité d'accès dans ledit espace commun (23), au robot (4) qui est en amont, en prenant en considération la direction d'alimentation de ladite première ligne de transport (6).

5. Système de transfert selon la revendication 3 ou 4, **caractérisé en ce que** ledit tampon (21) est fixe le long de ladite direction longitudinale (A).

6. Système selon la revendication 1 ou 2, **caractérisé en ce que** ledit tampon (21) est mobile le long de ladite direction longitudinale (A) d'une manière coordonnée avec les mouvements desdits robots (5), sous l'action des moyens d'actionneur, entre deux positions opérationnelles, dans lesquelles ledit emplacement est sélectivement à l'intérieur de l'un et respectivement de l'autre desdits champs de travail (16).

7. Système de transfert selon l'une quelconque des revendications précédentes, **caractérisé en ce que** ledit tampon (21) est allongé le long d'un axe horizontal (C) orthogonal à ladite direction longitudinale (A) afin de définir une pluralité d'emplacements qui sont placés côte à côte le long dudit axe (C).

8. Système selon la revendication 7, **caractérisé en ce que** ledit tampon (21) s'étend sur toute la largeur de ladite première ligne de transport (6).

9. Système selon la revendication 8, **caractérisé en ce que** ledit tampon (21) est supporté au niveau de ses extrémités latérales par deux montants (22) définissant une partie d'une structure de cellule (19) qui supporte également lesdits robots (4).

10. Système selon l'une quelconque des revendications précédentes, **caractérisé en ce que** lesdits robots sont des robots Delta.
